Europäisches Patentamt

European Patent Office

Office européen des brevets

(11) Publication number: **0 166 781**
**B1**

(12) **EUROPEAN PATENT SPECIFICATION**

(45) Date of publication of patent specification: 20.09.89

(21) Application number: **84900299.3**

(22) Date of filing: **27.12.83**

(86) International application number:
**PCT/JP83/00456**

(87) International publication number:
**WO 85/02936 04.07.85 Gazette 85/15**

(51) Int. Cl.⁴: **H 01 B 3/44**

(54) **CROSSLINKED POLYETHYLENE CABLE.**

(43) Date of publication of application:
**08.01.86 Bulletin 86/02**

(45) Publication of the grant of the patent:
**20.09.89 Bulletin 89/38**

(84) Designated Contracting States:
**BE**

(56) References cited:
**FR-A-2 089 349**
**FR-A-2 434 465**
**JP-A-49 061 643**
**JP-A-55 078 409**
**JP-B-49 029 008**
**JP-B-54 037 668**
**JP-B-56 051 180**
**CHEMICAL ABSTRACTS, vol. 99, no. 24, 12th December 1983, page 57, abstract no. 196226q, Columbus, Ohio, US; & JP-A-58 57 207 (TOKYO ELECTRIC POWER CO., INC.) 05-04-1983**
**CHEMICAL ABSTRACTS, vol. 99, no. 12, 19th September 1983, page 38, abstract no. 89111b, Columbus, Ohio, US; & JP-A-58 19 810 (HITACHI CABLE, LTD) 05-02-1983**

(73) Proprietor: **SUMITOMO ELECTRIC INDUSTRIES LIMITED**
**No. 15, Kitahama 5-chome Higashi-ku Osaka-shi Osaka 541 (JP)**

(72) Inventor: **MATSUBARA, Hironaga Osaka Seisakusho Sumitomo**
**Electric Industries, Ltd. 1-3, Shimaya 1-chome Konohana-ku, Osaka-shi Osaka 554 (JP)**
Inventor: **YAMANOUCHI, Shosuke Osaka Seisakusho Sumitomo**
**Electric Industries, Ltd. 1-3, Shimaya 1-chome Konohana-ku, Osaka-shi Osaka 554 (JP)**
Inventor: **FUKUNAGA, Sadao Osaka Seisakusho Sumitomo**
**Electric Industries, Ltd. 1-3, Shimaya 1-chome Konohana-ku, Osaka-shi Osaka 554 (JP)**

(74) Representative: **Rackham, Stephen Neil et al GILL JENNINGS & EVERY 53-64 Chancery Lane London WC2A 1HN (GB)**

Courier Press, Leamington Spa, England.

(58) References cited:

WPIL, FILE SUPPLIER, Derwent Publication Ltd,
London, GB; AN = 83-52860K & JP-A- 58 068
804 (HITACHI) 23-04-1983

WPIL, FILE SUPPLIER, Derwent Publication Ltd,
London, GB; AN = 83-47727K & JP-A-58 059
025 (HITACHI) 07-04-1983

CHEMICAL ABSTRACTS, vol. 100, no. 20, 14th
May 1984, page 67, abstract no. 157920f,
Columbus, Ohio, US; & JP-A-58 225 504
(SUMITOMO) 23-12-1983

## Description

Technical Field

This invention relates to cross-linked polyethylene cables having excellent characteristics against degradation, particularly degradation at high temperatures.

Background Art

It is well known that cross-linked polyethylene cables, when they are placed under an applied voltage for a long time in a water environment, cause so-called "penetrated water degradation" resulting in breakdown of an insulation. This degradation is believed to take place because the water which has penetrated into a cross-linked polyethylene insulation acts as a nuclei to form so-called "water trees" in the insulation.

Many approaches have been tried for improving the penetrated water degradation of cross-linked polyethylene cables. For example, improved cables or cable joints are described in Japanese Patent Publication No. 89322/1974, Japanese Utility Model Publication No. 29008/1974 and Japanese Patent Publication No. 51180/1981. In these cables or joints, a polyethylene composition with an ethylene-vinyl acetate copolymer (hereinafter referred to as EVA) compounded therein is used as an insulating material, whereby resistance against the penetrated water degradation have been improved to a certain extent.

Recently, however, it has been discovered that when cross-linked polyethylene cables, particularly those cables having a thick insulation are placed under an applied voltage for a long time at high temperatures such as 90°C, they are degraded seriously.

The present inventors conducted various experiments and analysis to clarify the reasons for the above degradation. As a result, it has been found that the cross-linked polyethylene cable of the present invention which is described later causes no degradation as mentioned above.

Disclosure of the Invention

The present invention is intended to provide a cross-linked polyethylene cable having excellent characteristics against degradation at high temperatures. The gist of the present invention resides in a cross-linked polyethylene cable characterized by extrusion coating a polyethylene composition on a conductor, the polyethylene composition comprising polyethylene, more than 15% to less than 30% by weight of an ethylene-vinyl acetate copolymer having a vinyl acetate content of more than 25% to less than 35% by weight and an organic peroxide and thereafter cross-linking the thus coated polyethylene composition.

The vinyl acetate (VA) content of the ethylene-vinyl acetate copolymer used in the present invention is preferably in an amount of 28 to 33% on weight basis.

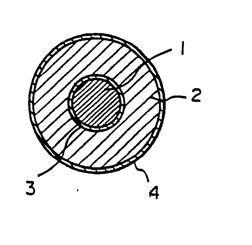

Brief Description of the Drawing

The Figure is a cross-section view of a cross-linked polyethylene cable.

Modes for Carrying out the Invention

The present invention will hereinafter be explained in detail by reference to the following examples and comparative examples.

Cross-linked polyethylene cables (150 mm², 66 kV class) were produced using the compositions shown in Table 1. The Figure shows a cross-sectional view of each cross-linked polyethylene cable comprising a conductor 1, an insulating material 2, an inner semiconductive layer 3 and an outer semiconductor layer 4. Semiconductive layers 3 and 4 were each made of NUC 0580 (trade name, produced by Nippon Unicar Co., Ltd.).

A current was circulated bringing the temperature of the conductor to 90°C and the voltage of 160 kV was applied.

The time taken before breakdown occurred in the cable under application of voltage was measured to evaluate degradation of the cable at high temperatures. These times are hereinafter referred to as the "breakdown time", and are shown in Table 1 with the breakdown time (334 hours) of Comparative Example 1 as a base (1).

The following can be seen from Table 1.

With cables produced using compositions in which 20% EVA having a VA content of 15% or 25%, respectively, was compounded with polyethylene (Comparative Examples 2 and 3), the resistance to degradation with the cable of Comparative Example 1, but it was not satisfactorily improved to the extent that a long service life (e.g., 30 years) could be guaranteed.

On the other hand, when EVA having a VA content of more than 25% was used (Example 1), degradation at high temperature was greatly improved. In particular, when the VA content was 30% (Example 2), the cable showed a very high resistance to degradation. Also, at a VA content of 33%, excellent characteristics were obtained.

However, when the VA content was further increased, e.g., when EVA having a VA content of 35% was used (Comparative Examples 4 and 5), the characteristics of the resulting cables were slightly improved as compared with the cable of Comparative Example 1, but they were not satisfactory.

EP 0 166 781 B1

Table 1

| | Comp. Ex. 1 | Comp. Ex. 2 | Comp. Ex. 3 | Ex. 1 | Ex. 2 | Ex. 3 | Comp. Ex. 4 | Comp. Ex. 5 | Comp. Ex. 6 | Comp. Ex. 7 | Ex. 4 | Ex. 5 |
|---|---|---|---|---|---|---|---|---|---|---|---|---|
| Polyethylene*1 | 100 | 80 | 80 | 80 | 80 | 80 | 80 | 60 | 90 | 60 | 85 | 75 |
| EVA*2, VA=15% by wt. | | 20 | | | | | | | | | | |
| " *3, VA=25% by wt. | | | 20 | | | | | | | | | |
| " *4, VA=28% by wt. | | | | | 20 | | | | | 40 | | |
| " *5, VA=30% by wt. | | | | | | 20 | | | | | 15 | 25 |
| " *6, VA=33% by wt. | | | | | | | 20 | 40 | 10 | | | |
| " *7, VA=35% by wt. | | | | | | | | | | 20 | | |
| DCP*8 | 2 | 2 | 2 | 2 | 2 | 2 | 2 | 2 | 2 | 2 | 2 | 2 |
| SWC*9 | 0.2 | 0.2 | 0.2 | 0.2 | 0.2 | 0.2 | 0.2 | 0.2 | 0.2 | 0.2 | 0.2 | 0.2 |
| Breakdown Time (with that of Comparative Example 1 as 1) | 1 | 1.1 | 1.2 | 3.3 | 4.0 | 3.1 | 1.3 | 1.3 | 1.1 | 1.2 | 3.5 | 3.3 |

Note: *1 Density=0.92, M.I.=1.3 (produced by Sumitomo Chemical Co., Ltd.)
*2 Density=0.94, M.I.=0.6 (produced by Sumitomo Chemical Co., Ltd.)
*3 Density=0.95, M.I.=3 (produced by Sumitomo Chemical Co., Ltd.)
*4 Density=0.95, M.I.=15 (produced by Mitsui Polychemical Co., Ltd.)
*5 Density=0.95, M.I.=20 (produced by Sumitomo Chemical Co., Ltd.)
*6 Density=0.96, M.I.=30 (produced by Mitsui Polychemical Co., Ltd.)
*7 Density=0.96, M.I.=60 (produced by Sumitomo Chemical Co., Ltd.)
*8 Dicumyl peroxide (produced by Mitsui Petrochemical Co., Ltd.)
*9 Anti-oxidant (produced by Kawaguchi Chemical Co., Ltd.)

The amount of EVA having a VA content falling within the above-described range which is specified by the amount of the polyethylene to be compounded. With a cable produced using a composition in which the same EVA as was used in Example 3 is used, but the amount of the EVA compounded is 40% or higher as in Comparative Example 5, the resistance to degradation is slightly superior to that of Comparative Example 1, but the same is not improved satisfactorily. The same is the case with Comparative Example 7. Conversely, when the same EVA as was used in Example 3 is used, but the amount of the EVA compounded is 10% or less, as can be seen from Comparative Example 6, the resistance to degradation is not satisfactory.

On the other hand, cables produced using compositions in which EVA having a VA content falling within the above-described range, i.e., EVA having a VA content of 15% (Example 4) and EVA having a VA content of 25% (Example 5), is compounded with polyethylene show excellent resistance to degradation.

As can be seen from the results shown in Table 1, only when the compositions of the invention comprising polyethylene and EVA are used as insulating materials, are there obtained cables having excellent characteristics. The reasons for the effect are not clear; however, the effect was not shown in any of Japanese Patent Publication No. 89322/1974, Japanese Utility Model Publication No. 29008/1974 and Japanese Patent Publication No. 51180/1981.

Exploitation in Industry

The cross-linked polyethylene cables of the present invention are useful for transmission of current in high voltages, and for factory wiring and housing wiring of current in low voltages. The cables show greatly improved resistance to degradation under continuously applied voltages at high temperatures for extended periods of time. Thus, the cables have a long service life even when used under conditions of high temperature for extended periods of time.

**Claims**

1. A cross-linked polyethylene cable which is prepared by extrusion coating a polyethylene composition on a conductor, the polyethylene composition comprising polyethylene, 15% or more to less than 30% by weight of an ethylene-vinyl acetate copolymer having a vinyl acetate content of more than 25% to less than 35% by weight and an organic peroxide, and thereafter cross-linking the thus coated polyethylene composition.

2. The cross-linked polyethylene cable as claimed in Claim 1, wherein the vinyl acetate content of the ethylene vinyl acetate copolymer is from 28 to 33% by weight.

**Patentansprüche**

1. Ein Kabel aus vernetztem Polyäthylen, das durch Extrusionsbeschichtung eines Leiters mit einer Polyäthylenmasse gefertigt wird, wobei die Polyäthylenmasse Polyäthylen mit nach Gewicht 15% oder mehr bis weniger als 30% eines Äthylenvinylacetat-Copolymers mit einem Vinylacetatgehalt von nach Gewicht mehr als 25% bis weniger als 35% sowie ein organisches Peroxid umfaßt und die auf diese Weise aufgetragene Polyäthylenmasse danach vernetzt wird.

2. Das Kabel aus vernetztem Polyäthylen nach Anspruch 1, bei dem der Gehalt an Vinylacetat des Äthylenvinylacetat-Copolymers nach Gewicht von 28 bis 33% beträgt.

**Revendications**

1. Câble en polyéthylène réticulé qui est fabriqué par extrusion d'une gaine d'une composition de polyéthylène sur un conducteur, la composition de polyéthylène comprenant du polyéthylène, 15% ou davantage jusqu'à moins de 30% en poids d'un copolymère éthylène-acétate de vinyle ayant une teneur en acétate de vinyle de plus de 25% à moins de 35% en poids, et un peroxyde oragnique, puis par réticulation de la composition de polyéthylène ainsi appliquée.

2. Câble en polyéthylène réticulé suivant la revendication 1, dans lequel la teneur en acétate de vinyle du copolymère éthylène-acétate de vinyle est de 28 à 33% en poids.